# EUROPEAN PATENT APPLICATION

(11) **EP 4 708 046 A1**
(43) Date of publication of application: **11.03.2026**
(21) Application number: 24802664.3
(22) Date of filing: 08.04.2024
(51) Int. Cl.: G06F 9/50

(54) **PARALLELISM DETERMINATION METHOD IN DISTRIBUTED OPERATION, AND ELECTRONIC DEVICE AND STORAGE MEDIUM**

(30) Priority: 08.05.2023 CN 202310516599
(71) Applicant: ZTE CORPORATION, Shenzhen, Guangdong 518057 (CN)
(72) Inventor: TU, Yaofeng, Shenzhen, Guangdong 518057 (CN); NIU, Jiahao, Shenzhen, Guangdong 518057 (CN); GAO, Hong, Shenzhen, Guangdong 518057 (CN); HAN, Yinjun, Shenzhen, Guangdong 518057 (CN); HUANG, Xu, Shenzhen, Guangdong 518057 (CN); GU, Rong, Shenzhen, Guangdong 518057 (CN); ZHANG, Dongtao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/086526
(87) International publication number: WO 2024/230377

(57) **Abstract**

Provided in the embodiments of the present application are a parallelism determination method in a distributed operation, and an electronic device and a storage medium. The method comprises: acquiring data features in operation data corresponding to a distributed operation; acquiring candidate parallelisms in a candidate parallelism list, and determining an execution time in a candidate reduction stage according to the candidate parallelisms and the data features; and according to the execution time in the candidate reduction stage, determining, from among the candidate parallelism list, a target parallelism corresponding to the distributed operation.

## Description

### CROSS-REFERENCE TO RELATED APPLICATIONS

The present application is proposed based on and claims priority to Chinese Application No. 202310516599.3, filed with the Chinese Patent Office on May 8, 2023, with the title "PARALLELISM DETERMINATION METHOD IN DISTRIBUTED OPERATION, AND ELECTRONIC DEVICE AND STORAGE MEDIUM", the disclosure of which is hereby incorporated by reference in its entirety.

### TECHNICAL FIELD

The present application relates to the field of computer technology, particularly to a parallelism determination method in distributed operation, an electronic device, and a storage medium.

### BACKGROUND

MapReduce is a distributed parallel computing model that mainly comprises three core stages: map, shuffle, and reduce. It has been widely used in mainstream distributed computing systems such as Hadoop and Spark. The size of parallelism (i.e. the number of tasks in each stage of MapReduce) directly affects the disk and network overhead during the distributed operation process, thereby affecting the computational efficiency and stability of the entire distributed computing system. Therefore, setting a reasonable parallelism is a key issue in improving the performance of distributed systems.

### SUMMARY

The purpose of the embodiments of the present application is to provide a parallelism determination method in a distributed operation, an electronic device, and a storage medium that can acquire reasonable parallelism in distributed operations and improve the system performance of distributed systems.

To solve the above technical problems, the embodiments of the present application are implemented through the following aspects.

In a first aspect, an embodiment of the present application provides a parallelism determination method in a distributed operation, comprising: acquiring data features in operation data corresponding to a distributed operation; acquiring candidate parallelisms in a candidate parallelism list, to determine execution time in a candidate reduction stage according to the candidate parallelisms and the data features; and determining, from the candidate parallelism list, a target parallelism corresponding to the distributed operation according to the execution time in the candidate reduction stage.

In a second aspect, an embodiment of the present application provides an electronic device, comprising: a memory, a processor and computer-executable instructions stored in the memory and executable on the processor, the computer executable instructions, when executed by the processor, implement the steps of the method described in the first aspect.

In a third aspect, an embodiment of the present application provides a computer-readable storage medium for storing computer-executable instructions that, when executed by the processor, implement the steps of the method described in the first aspect.

### BRIEF DESCRIPTION OF DRAWINGS

In order to provide a clearer explanation of the embodiments or technical solutions in the present application or existing technology, a brief introduction will be given to the accompanying drawings required for the description of the embodiments or existing technology. It is obvious that the accompanying drawings described below are only some of the embodiments recorded in the present application. For those skilled in the art, other drawings can be obtained based on these drawings without requiring creative labor.
Fig. 1 shows a flowchart of the parallelism determination method in distributed operation provided by the embodiments of the present application.
Fig. 2 shows a schematic diagram of the model training process provided by the embodiments of the present application.
Fig. 3 shows a schematic diagram of the structure of the parallelism determination device in distributed operations provided by the embodiments of the present application.
Fig. 4 is a schematic diagram of the hardware structure of an electronic device that executes the parallelism determination method in distributed operations provided in the embodiments of the present application.

### DETAILED DESCRIPTION

In order to enable those skilled in the art to better understand the technical solution in the present application, the following will provide a clear and complete description of the technical solution in the embodiments of the present application in conjunction with the accompanying drawings. Obviously, the described embodiments are only a part of the embodiments of the present application, not all of them. Based on the embodiments in the present application, all other embodiments obtained by those skilled in the art without creative labor should fall within the scope of protection of the present application.

It should be noted that in the three-stage in MapReduce, the parallelism of the map stage is generally determined by the distributed system according to the data partitioning of the input storage system, and usually does not need to be manually set; Shuffle is responsible for the data transmission process between the map stage and the reduce stage, and its parallelism, i.e. the parallelism of the reduce stage, does not need to be set separately; The parallelism of the reduce stage needs to be manually set by the user based on their own experience. Therefore, existing related parallelism tuning techniques mainly focus on parallelism tuning during the reduce stage.

With the continuous expansion of distributed cluster scale, reasonable parallelism settings can ensure the stability of distributed systems while fully utilizing cluster resources and improving computing efficiency, especially in large-scale cluster deployment situations.

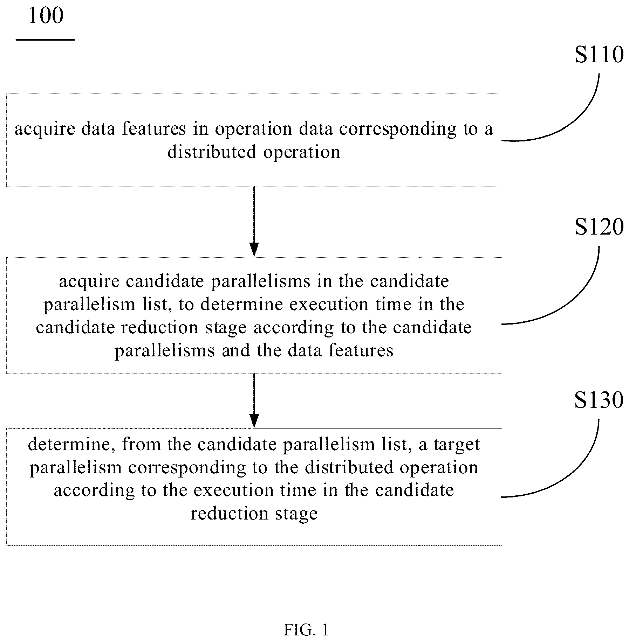

In this situation, Fig. 1 shows a flowchart of the parallelism determination method 100 in the distributed operation provided by the embodiments of the present application, which can be executed by the electronic device such as terminal devices or server devices. In other words, the method can be executed by software or hardware installed on terminal devices or server devices. The server includes but is not limited to: a single server, a server cluster, a cloud server, or a cloud server cluster.

In some embodiments, in the present application, the terminal device or server device may adopt distributed big data computing frameworks such as Hadoop MapReduce and Spark when performing operation parallelism tuning for distributed operation.

In addition, considering that the terminal device or server device needs to determine the parallelism (also known as reduction parallelism) in the distributed operation, the terminal device or server device may have the ability to receive operation data from the distributed operation, receive distributed operation to be tuned, and so on.

Based on this, as shown in Fig. 1, the method 100 may include but is not limited to the following steps S110 to S130.

In Step S110, data features in the operation data corresponding to the distributed operation are acquired.

Wherein the data feature may comprise at least one of the following: reduction operator type, input data scale, mapping parallelism, and reduction parallelism. The aforementioned reduction operator type, input data scale, mapping parallelism, and constraint parallelism can effectively describe the execution process of distributed computing operation, such as how many map tasks there are in total and how much data each map task processes.

In an implementation, the data format for acquiring the operation data can be a JSON string, and the required operation data can be parsed and extracted from the JSON string.

In Step S120, candidate parallelisms in the candidate parallelism list are acquired, and the execution time in the candidate reduction stage is determined according to the candidate parallelisms and the data features.

Wherein this embodiment takes the execution time in the reduction stage as the main optimization objective to determine the target parallelism. That is to say, in this embodiment, the parallelism is tuned by utilizing the relationship between the parallelism and the execution time in the reduction stage.

In this embodiment, there can be multiple ways to determine the execution time in the candidate reduction stage, such as using the candidate parallelism and data features as inputs to a pre-configured or pre-trained Artificial Intelligence (AI) model to predict the execution time in the candidate reduction stage, etc. without limitation here.

In Step S130, the target parallelism corresponding to the distributed operation is determined from the candidate parallelism list and according to the execution time in the candidate reduction stage.

In this embodiment, when determining the parallelism of the distributed operation, at least one of the reduction operator type, input data scale, mapping parallelism, and reduction parallelism is used as data feature, and the execution time in the reduction stage is used as data tag to determine the target parallelism, thereby achieving parallelism tuning. Thus, accurately representing the inherent execution process of the distributed operation, facilitating reasonable and effective prediction of operation performance, and ensuring the accuracy of the parallelism determination results and the system performance of the distributed operation system.

Based on this, as a possible implementation way, in order to better represent the inherent execution features of the distributed operation when using the data features to represent the distributed jobs, different characterization methods can be adopted for different data types in this embodiment to abstractly represent the distributed operation; at the same time, it can also solve the problem of difficulty in fine-grained abstract representation of distributed operation execution processes in related technologies.

For example, after acquiring the data features, the data features can be vectorized according to their data types (i.e., the data features can be characterized into vector form), such as converting the data features into the feature vectors according to the first rule. Wherein the first rule comprises at least one of the following (a) - (c).
(a) When the data feature is an enumeration type value, the data feature is converted into the feature vector according to the one hot encoding rule.
   For example, assuming that the reduction operator is an enumeration type value and there are a total of 10 types of reduction operators, the reduction operator repartition can be characterized as "[1,0,0,0,0,0,0,0,0]", the reduction operator GroupBy can be characterized as "[0,1,0,0,0,0,0,0]", and so on.
(b) When the data feature is a numerical type value, the data feature is converted into the feature vector according to a second rule, which comprises splitting the data feature by numerical bits according to numerical bits, and retaining the first two non-zero digits in the split numerical bits based on rounding logic, ignoring non-zero digits in other numerical bits after the first two non-zero digits, thus utilizing the insensitivity of the distributed system to small changes in parallelism and other numerical values, and the rounding logic can effectively reduce the search space, which is beneficial for subsequent model prediction and search processes. For example, for data over a hundred, the tens and hundreds place values are retained, ignoring the influence of their units place values. For data over a thousand, the thousands and hundreds place values are retained, ignoring the influence of their units and tens place values, and so on. Wherein the value range of each numerical bit is from 0 to 9.

For example, assuming the reduction parallelism is "289", then after being characterized according to the second rule mentioned above, it becomes "290". This is because distributed systems are not sensitive to small changes in parallelism and other values, and rounding logic can effectively reduce the search space, which is beneficial for subsequent model prediction and search processes.

In this embodiment, the mapping parallelism, reduction parallelism, etc. are vectorized according to numerical type values.

(c) When the data feature is a numerical value including a unit, any unit in the data feature is selected as a benchmark unit, and the data feature is converted into the feature vector based on the benchmark unit and the second rule.

For example, assuming the input data scale is in GB units, the numerical value of its data volume is characterized according to the second rule.

In this embodiment, the input data scale, execution time in the reduction stage, etc. can be vectorized according to the rules described in (c) above.

In one possible implementation, determining the target parallelism for each candidate parallelism in the candidate parallelism list can be achieved in various ways. For example, in this embodiment, the implementation process may comprise the following (1) - (2).
(1) Candidate parallelisms in the candidate parallelism list are traversed, wherein the candidate parallelism list is determined according to a candidate parallelism range and a first interval. For example, assuming the candidate parallelism range is [10, 100] and the first interval is 10, the candidate parallelism in the determined candidate parallelism list comprises {10, 20, 30, 40, 50, 60, 70, 80, 90, 100}.
(2) When a search duration does not reach a first threshold, and a candidate parallelism that meets a first condition is found, the search is stopped and the candidate parallelism that meets the first condition is taken as the target parallelism corresponding to the distributed operation.

Wherein the first condition comprises that the execution time in the candidate reduction stage determined according to the candidate parallelisms and the data features meets a first requirement.

In some embodiments, the process of determining the first requirement may include but is not limited to: determining the improvement effect according to the execution time in the candidate reduction stage and the execution time in a benchmark reduction stage, and determining whether the first requirement is met or not according to the improvement effect, if the improvement effect is greater than the second threshold, it is determined that the first requirement is met, if the improvement effect is not greater than the second threshold, it is determined that the first requirement is not met.

In this embodiment, the improvement effect can be characterized by the improvement ratio and duration of the execution time in the reduction stage. For example, assuming the execution time in the benchmark reduction stage is 100 seconds and the execution time in the candidate reduction stage is 80 seconds, the improvement effect is (100-80)/100=20%, or the improvement effect is 100-80=20. It is not limited in this embodiment.

The first, second, and third thresholds mentioned in this embodiment can be configured by the user through an interactive interface or generated in real time based on historical execution times in the reduction stage, etc., without limitation here.

In addition, the aforementioned execution time in the benchmark reduction stage, also referred to as a baseline value, can be configured by the user through an interactive interface or determined according to the data features and the benchmark parallelism. For example, when determined according to the data features and the benchmark parallelism (or also known as initial parallelism), the data features and the benchmark parallelism can be input into the target prediction model to predict the execution time in the benchmark reduction stage. The benchmark parallelism can be configured by the user through an interactive interface or a specified parallelism in the candidate parallelism list, such as the first parallelism in the candidate parallelism list or the minimum parallelism, etc., without limitation here.

In this embodiment, the target prediction model can be trained on AI models such as random forest, neural network, linear regression, and regression prediction model (XG Boost) based on the operation data of the distributed operation, enabling it to have the ability to predict the execution time in the benchmark reduction stage.

For distributed operation systems, considering that the performance of distributed operations tends to increase first and then decrease with the increase of reduction parallelism, in the process of searching for reduction parallelism (i.e. target parallelism), the optimal and suboptimal values of parallelism are often in adjacent positions. Based on this, in this embodiment, as a possible implementation, when determining the target parallelism based on the above (1)-(2), the search duration does not reach the first threshold, but the candidate parallelism list has been traversed and there is no candidate parallelism that meets the first condition, then the candidate parallelism list can be redetermined by narrowing the search interval and expanding the search range to search for the target parallelism, so as to ensure that a more optimal candidate reduction parallelism is found within a limited search time.

For example, in this embodiment, when the search duration does not reach the first threshold, but the candidate parallelism list has been traversed and no candidate parallelism that meets the first condition is found, the candidate parallelism list is redetermined according to the candidate parallelism range and the second interval, wherein the second interval is smaller than the first interval; the candidate parallelisms in the redetermined candidate parallelism list is re-traversed; and when the search duration does not reach the first threshold and the candidate parallelism that meets the first condition is found, the search is stopped and the candidate parallelism that meets the first condition is taken as the target parallelism of the distributed operation.

For example, assuming the candidate parallelism range is [10, 100] and the first interval is 10, the candidate parallelism in the determined candidate parallelism list includes {10, 20, 30, 40, 50, 60, 70, 80, 90, 100}, if the search duration does not reach the first threshold, but the candidate parallelism list {10, 20, 30, 40, 50, 60, 70, 80, 90, 100} has been traversed and no candidate parallelism that meets the first condition is found, then based on the candidate parallelism range of [10,100] and the second interval of 5, redetermining the candidate parallelism list, i.e. {10, 15, 20, 25, 30, 35, 40, 45, 50, 55, 60, 65, 70, 75, 80, 85, 90, 95, 100}. Comparing the candidate parallelism list determined based on the first interval and the second interval, the candidate parallelism list based on the second interval narrows the search interval to expand the search scope.

In some embodiments, if no candidate parallelism satisfying the first condition is found based on the redetermined candidate parallelism list, the search interval can be narrowed again when the search duration does not reach the first threshold, such as the third interval 4, the fourth interval 2, the fifth interval 1, etc., to determine the candidate parallelism list and repeat the search for the target parallelism until the target parallelism that satisfies the first condition is found and/or until the search duration reaches the first threshold.

In addition, during the search process of continuously narrowing the search interval and expanding the search range to achieve target parallelism, if the search duration does not reach the first threshold, but no candidate parallelism that meets the first condition is found, returning a prompt message, if no candidate parallelism that meets the first condition is found, taking the candidate parallelism that meets the second condition during the search as the target parallelism of the distributed operation; wherein the second condition comprises that the execution time in the candidate reduction stage determined according to the candidate parallelisms and the data features meets a second requirement.

Wherein, similar to the determination of the first requirement mentioned above, the determination process of the second requirement may also comprise: determining the improvement effect according to the execution time in the candidate reduction stage and the execution time in a benchmark reduction stage, when the improvement effect is greater than the third threshold, determining that the second requirement is met; otherwise, determining that the second requirement is not met; wherein the execution time in the benchmark reduction stage is determined according to the data features and a benchmark parallelism, the third threshold is lower than the second threshold, i.e., when no candidate parallelism that meets the first condition is found, the requirement of the improvement effect can be reduced. For example, if the second threshold corresponding to the improvement effect of the first condition is 20%, then the second threshold corresponding to the improvement effect of the second condition can be 10%.

Or the determination process of the second requirement may also comprise: determining the improvement effect corresponding to each candidate parallelism, and taking the candidate parallelism pair with the best improvement effect among the multiple candidate parallelisms traversed during the search process as the target parallelism.

In this embodiment, the process of searching for target parallelism by continuously reducing the search interval and expanding the search range can also be referred to as Leap-forward Grid Search Algorithm, which fully utilizes the changing relationship between the reduction parallelism and the operation performance (i.e., the execution time in the reduction stage), making the entire parallelism tuning process non-invasive, low-overhead, time-saving, and highly accurate.

In the process of searching for the target parallelism mentioned above, there are various ways for "determining the execution time in the candidate reduction stage according to the candidate parallelisms and the data features". For example, similar to acquiring the execution time in the benchmark reduction stage mentioned above, it can be acquired based on the target prediction model, such as inputting the feature vectors corresponding to the candidate parallelism and data features into the target prediction model to obtain the execution time in the candidate reduction stage.

Wherein before inputting the data features into the target prediction model, the data features can be vectorized according to the first rule mentioned above to better represent the inherent execution characteristics of distributed operations. Then, the vectorized data features and the candidate parallelism can be input into the target prediction model. The process of vectorizing the data features will not be repeated here.

In addition, the target prediction model is trained based on the first training dataset, the first training dataset comprises feature data and label data from historical operation data corresponding to the distributed operation, the label data is the execution time in a reduction stage corresponding to the distributed operation.

In this embodiment, the target prediction model can be trained by the electronic device itself or by other devices besides itself, without limitation here.

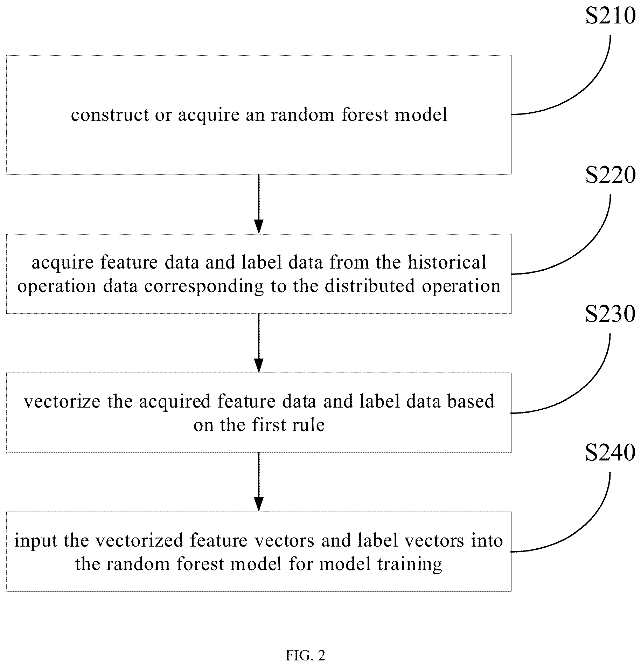

Taking the random forest model as the base model used for training the target prediction model and the process of training the target prediction model by electronic devices themselves as examples, the training process of the target prediction model will be introduced. For example, as shown in Fig. 2, the training process can include but is not limited to the following Step S210-Step S240.

In Step S210, a random forest model is constructed or acquired.

Wherein the random forest model takes the feature vectors of distributed operation data as input, the execution time of operation reduction stage as output, the impurity measurement indicator is the square average error, and there is no limit on the maximum depth of the decision tree and the minimum number of node samples in the random forest model, and the sampling method is the bootstrap sampling method.

In Step S220, feature data and label data are acquired from the historical operation data corresponding to the distributed operation.

For example, historical operation data in JSON string format is collected through Spark's Representational State Transfer (REST) Application Programming Interface (API), and feature data (such as reduction operator type, input data scale, mapping parallelism, etc.) and label data (such as parallelism as feature data) are extracted from the historical operation data through data preprocessing. Wherein the feature data can effectively describe the execution process of distributed operations, such as how many map tasks there are in total, how much data each map task processes, etc. The above label data corresponds to the main optimization objectives.

In Step S230, the acquired feature data and label data are vectorized based on the first rule.

When performing vectorization processing, the processing procedure can refer to the relevant description of the first rule mentioned above, which will not be repeated here.

In Step S240, the vectorized feature vectors and label vectors are input into the random forest model for model training. During the iterative training process of the guided focus algorithm model, different sampling sets are generated for each decision tree using bootstrap sampling method. Based on the generated different sampling sets, the base learner decision trees are trained separately. The decision trees use the square average error to identify the feature columns in the sampling set that can minimize data impurity, and continue to split and grow downwards until they are inseparable. Finally, the average output of all decision trees is taken as the output value of the entire random forest model.

The random forest model (i.e., the target prediction model) trained in Step S240 learns the relationship between the data features and label data of distributed operations, with the ability to fit the label data to predict operation performance (such as the execution time in the reduction stage). For example, it takes the data features of distributed operations as input and the average output of all base learners as the output value, which is the predicted execution time in the reduction stage.

The execution time in the benchmark reduction stage and the execution time in the candidate reduction stage mentioned above can both be predicted based on the trained target prediction model.

Furthermore, in order to enable the trained target prediction model (such as the random forest model) to adapt to the constantly changing actual production environment, during the operation of the distributed system, the operation data of newly added and completed distributed operations in the distributed operation cluster (such as operation data of untuned distributed operation, the operation data of previously tuned distributed operation, etc.) can be collected in real time, and the collected operation data of newly added and completed distributed operations can be used, and the model training process provided in the aforementioned Steps S210 to S240 is adopted, to perform model training again on the trained model, such as incremental training.

For example, taking the target prediction model as a random forest model, the collected operation data of newly added and completed distributed operations can be used as incremental data, and an incremental training dataset (or second training dataset) can be determined based on the incremental data. Then, a new decision tree is added to the trained random forest model, and the new decision tree is trained using the incremental training dataset. For example, a different sampling set is first generated for each new decision tree through a bootstrap sampling method, new base learner decision trees are then trained based on the generated different sampling sets. The squared mean error is used to identify the feature columns in the sampling set that minimize data impurity, and decision trees are continuously split and grown downwards until they are inseparable. After the incremental training is completed, the new model is used to replace the original model. This allows the target prediction model to adapt to different actual production environments and also determines the stability of the model fitting effect.

Wherein the second training dataset comprises feature data and label data in the operation data corresponding to the newly added distributed operation, and the label data is the execution time in the reduction stage corresponding to the newly added distributed operation. In this embodiment, when using the newly added training dataset for incremental training of the model, the newly added training dataset may be subjected to featurized vector processing according to the first rule, which will not be described in detail in this embodiment.

Based on the relevant description in the embodiment of the method 100 aforementioned, the following further exemplary description of the parallelism determination process in the distributed operation provided by the present application is provided with examples. The content is as follows.

The predicted execution time in the reduction stage is used as a performance metric, and a Leap-forward Grid Search Algorithm is employed. When a search time upper limit (e.g., a first threshold) is given, the initial reduction parallelism (i.e., a benchmark parallelism) and the acquired feature vector are first input into the target prediction model (e.g., random forest model) to obtain the execution time in the benchmark predicted reduction stage and use it as the baseline value. Then, based on the candidate parallelism range and the set initial value interval (e.g., the first interval), the candidate parallelism list is generated, and each candidate parallelism is iteratively traversed and tried. The candidate parallelism and feature vectors are input into the trained target prediction model to obtain the predicted execution time in the candidate reduction stage. If the performance improvement effect of the execution time in the candidate reduction stage compared to the baseline operation is greater than the second threshold, or the search time exceeds the first threshold, the search process is exited. Otherwise, reduce the value spacing to half of the original value (such as the second threshold), and then continue to traverse the candidate parallelism list. Finally, the best performing reduction parallelism value during the search process will be used as the final recommended reduction parallelism, i.e., the target parallelism.

Based on this, the following example uses a random forest model as the target prediction model to further explain the implementation process in conjunction with Steps S301-S307. The example content is as follows.

In step S301, the Leap-forward Grid Search Algorithm is initialized, such as assigning initial values to the search time upper limit (such as the first threshold), value spacing (such as the first interval), performance improvement threshold (such as the second threshold), etc.

In Step S302, the feature vectors and the benchmark parallelism corresponding to the distributed operation to be tuned are input into the trained random forest model to predict the execution time in the benchmark reduction stage, which is the baseline value.

In Step S303, the candidate parallelism list is determined based on the input candidate parallelism range and the set value space, such as the first interval.

In Step S304, the candidate parallelism list sequentially traversed to determine whether there is a target candidate parallelism and whether the search duration exceeds the first threshold. If it does not exceed the first threshold and there is a target candidate parallelism, Step S307 is executed; if it does not exceed the first threshold and there is no target candidate parallelism, Step S305 is executed; if the timeout occurs, Step S307 is executed.

When executing Step S304, it is possible to first determine whether the search duration exceeds the first threshold, and then determine whether there is a target candidate parallelism. Alternatively, it is possible to first determine whether there is a target candidate parallelism, and then determine whether the search duration exceeds the first threshold. This embodiment is not limited here.

In Step S305, whether the traversal of the current candidate parallelism list has ended is determined. If so, Step S306 is followed. If not, Step S307 is followed.

In Step S306, the current value spacing is reduced to half of the original value (such as the second interval), the candidate parallelism list is redetermined, and Step 304 is executed again based on the redetermined candidate parallelism list. Steps S304 to S306 are repeated until the search duration exceeds the first threshold or the target parallelism is found.

In Step S307, the searched target parallelism is used as the final recommendation reduction parallelism and is fed back to the operation to be tuned.

Alternatively, if the target parallelism is not found when the search duration reaches the first threshold, the candidate parallelism that improves the best performance among multiple candidate parallelisms in the search process can be used as the final reduction parallelism and provide feedback to the operation to be tuned.

The implementation process of the aforementioned steps provided in this example can refer to the relevant descriptions in the aforementioned embodiment of the parallelism determination method in distributed operations, and achieve the same or corresponding technical effects. To avoid repetition, it will not be repeated here.

Also, the parallelism determination process for distributed operations provided in the present application may include, but is not limited to, the aforementioned steps, and may include more or fewer steps, without limitation here.

Based on the foregoing description, the parallelism determination solution in distributed operations provided in the present application has the following technical effects.
(1) It can reasonably abstractly represent the distributed operation in actual production environments, and combined with the low training and storage overhead of the random forest model, it only needs to be trained once to tune multiple distributed operations. Through the lightweight random forest model, the relationship between the data feature of distributed operations and the execution time in the operation reduction stage is learned, and the execution time in the operation reduction stage can be predicted, which can reduce the overhead of the parallelism tuning process.
(2) The present application utilizes the relationship between the reduction parallelism and operation performance for parallelism tuning, which can effectively narrow the search range and find the optimal reduction parallelism in less time, improving the efficiency of parallelism tuning and achieving more stable tuning results.
(3) The parallelism tuning process provided in the present application (i.e., the determination process for the target parallelism) is located before the execution of distributed operations and does not have any impact on the original operation execution process. In addition, the training and storage overhead of the random forest model are relatively small. The Leap-forward Grid Search Algorithm can find the optimal solution within the set tuned time limit, thereby making the entire tuning process non-invasive, low-overhead, time-saving, and highly accurate.
(4) The present application can be applied to various distributed computing frameworks based on the MapReduce parallel computing model, such as Hadoop MapReduce and Spark. It can adaptively select the parallelism of the reduce side to achieve the goal of improving operation performance by optimizing the parallelism of the reduce side. The entire process is non-invasive, low-overhead, time-saving, and highly accurate.

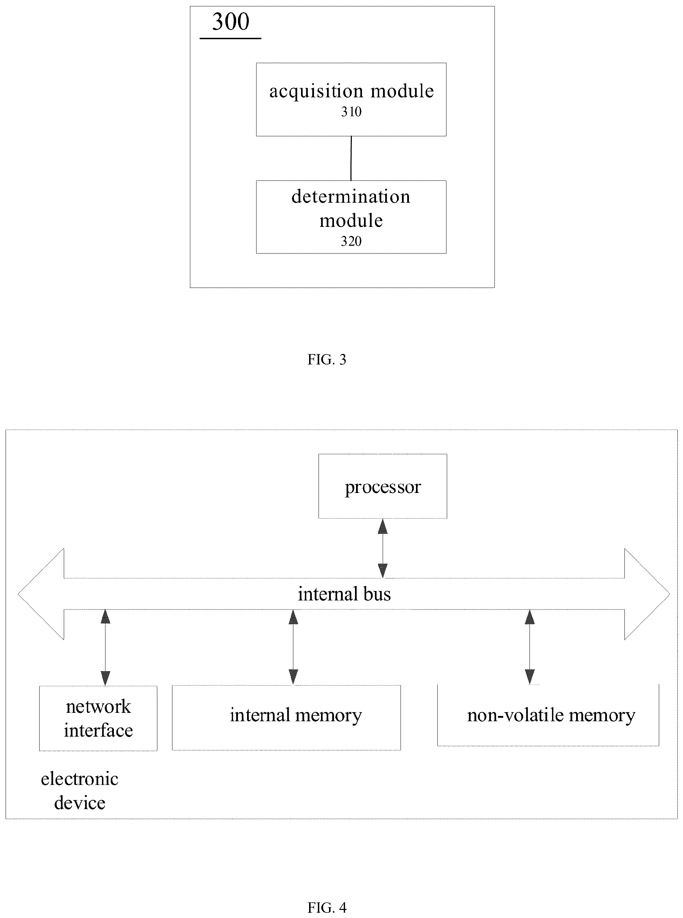

Fig. 4 shows a schematic diagram of the structure of the parallelism determination device 300 in the distributed operation provided by the embodiment of the present application. The device 300 comprises: a data acquisition module 310 for acquiring data features in the operation data corresponding to the distributed operation; a determination module 320 for acquiring candidate parallelisms in the candidate parallelism list, and determining the execution time in the candidate reduction stage according to the candidate parallelism and data features; and for determining the target parallelism corresponding to the distributed operation from the candidate parallelism list according to the execution time in the candidate reduction stage.

In some embodiments, the determination module 320 acquiring candidate parallelisms in the candidate parallelism list, and determining the execution time in the candidate reduction stage according to the candidate parallelisms and the data features, and determining the target parallelism corresponding to the distributed operation from the candidate parallelism list according to the execution time in the candidate reduction stage, comprise: traversing candidate parallelisms in the candidate parallelism list, wherein the candidate parallelism list is determined according to the candidate parallelism range and the first interval; when the search duration does not reach the first threshold, but the candidate parallelism that meets the first condition is found, stopping the search and taking the candidate parallelism that meets the first condition as the target parallelism corresponding to the distributed operation; wherein the first condition comprises that the execution time in the candidate reduction stage determined according to the candidate parallelisms and the data features meets the first requirement.

In some embodiments, the determination module 320 acquiring candidate parallelisms in the candidate parallelism list, and determining the execution time in the candidate reduction stage according to the candidate parallelisms and the data features, and determining the target parallelism corresponding to the distributed operation from the candidate parallelism list according to the execution time in the candidate reduction stage, further comprise: when the search duration does not reach the first threshold, but the candidate parallelism list has been traversed and no candidate parallelism that meets the first condition is found, redetermining the candidate parallelism list according to the candidate parallelism range and the second interval, wherein the second interval is smaller than the first interval; re-traversing the candidate parallelisms in the redetermined candidate parallelism list; when the search duration does not reach the first threshold and the candidate parallelism that meets the first condition is found, stopping the search and taking the candidate parallelism that meets the first condition as the target parallelism of the distributed operation.

In some embodiments, the determination module 320 acquiring candidate parallelisms in the candidate parallelism list, and determining the execution time in the candidate reduction stage according to the candidate parallelisms and the data features, and determining the target parallelism corresponding to the distributed operation from the candidate parallelism list according to the execution time in the candidate reduction stage, further comprise: when the search duration does not reach the first threshold, but no candidate parallelism that meets the first condition is found, taking the candidate parallelism that meets the second condition during the search as the target parallelism of the distributed operation; wherein the second condition comprises that the execution time in the candidate reduction stage determined according to the candidate parallelisms and the data features meets the second requirement.

In some embodiments, the determination module 320 determining the execution time in the candidate reduction stage according to the candidate parallelisms and the data features meets the first requirement, comprises: determining an improvement effect according to the execution time in the candidate reduction stage and the execution time in the benchmark reduction stage; when the improvement effect is greater than the second threshold, determining that the first requirement is met; wherein the execution time in the benchmark reduction stage is determined according to the data features and a benchmark parallelism.

In some embodiments, the determination module 320 determining the execution time in the candidate reduction stage according to the candidate parallelisms and the data features, comprises: inputting feature vectors corresponding to the candidate parallelism and the data features into the target prediction model to obtain the execution time in the candidate reduction stage; wherein the target prediction model is trained based on the first training dataset, the first training dataset comprises feature data and label data from historical operation data corresponding to the distributed operation, the label data is the execution time in the reduction stage corresponding to the distributed operation.

In some embodiments, the target prediction model is the random forest model, and the determination module 320 is further used for, determining the second training dataset, when a newly added distributed operation relative to the distributed operation is acquired, according to the operation data corresponding to the newly added distributed operation; performing incremental training on the newly added decision tree in the random forest using the second training dataset; wherein the newly added decision tree corresponds to the newly added distributed operation, the second training dataset comprises feature data and label data in the operation data corresponding to the newly added distributed operation, and the label data is the execution time in the reduction stage corresponding to the newly added distributed operation.

In some embodiments, the data acquisition module is further used for converting the data features into the feature vectors according to the first rule; wherein the first rule comprises at least one of the following: when the data feature is an enumeration type value, converting the data feature into the feature vector according to the one hot encoding rule; when the data feature is a numerical type value, converting the data feature into the feature vector according to the second rule, which comprises splitting the data feature by numerical bits according to numerical bits, and retaining the first two non-zero digits in the split numerical bits based on rounding logic, ignoring non-zero digits in other numerical bits after the first two non-zero digits; when the data feature is a numerical value including a unit, selecting any unit in the data feature as a benchmark unit, and converting the data feature into the feature vector based on the benchmark unit and the second rule.

In some embodiments, the data feature comprises at least one of the following: reduction operator type, input data scale, mapping parallelism, and reduction parallelism.

The device 300 provided in the embodiment of the present application can execute the various methods described in the previous method embodiments, and achieve the functions and beneficial effects of the various methods described in the previous method embodiments, which will not be repeated here.

Fig. 4 shows a schematic diagram of the hardware structure of the electronic device provided by the embodiments of the present application. Referring to this figure, at the hardware level, the electronic device comprises a processor, and in some embodiments, it further comprises an internal bus, a network interface, and a memory. Among them, the memory may include an internal memory, such as high-speed random-access memory (RAM), and may also comprise non-volatile memory, such as at least one disk storage. In addition, the electronic device may also comprise hardware required for other businesses.

The processor, network interface, and memory can be interconnected through an internal bus, which can be the Industry Standard Architecture (ISA) bus, Peripheral Component Interconnect (PCI) bus, or Extended Industry Standard Architecture (EISA) bus. The bus can be divided into address bus, data bus, control bus, etc. For ease of representation, only one bidirectional arrow is used in the figure, but it does not indicate that there is only one bus or one type of bus.

The memory is used to store programs. Specifically, the program may include program code, which includes computer operation instructions. The memory can include both internal memory and non-volatile memory, and provide instructions and data to the processor.

The processor reads the corresponding computer program from the non-volatile memory into the internal memory and runs it, forming a device that locates the specified user at the logical level. The processor executes the program stored in the memory and is specifically used to execute the methods disclosed in the embodiments shown in Figs. 1-3 and achieve the functions and beneficial effects of the various methods described in the previous embodiments. It will not be repeated here.

The methods disclosed in the embodiments shown in Figs. 1-2 of the present application can be applied to processors or implemented by processors. A processor may be an integrated circuit chip with signal processing capabilities. In the implementation process, each step of the above method can be completed through hardware integrated logic circuits or software instructions in the processor. The above-mentioned processor can be a general-purpose processor, including a Central Processing Unit (CPU), a Network Processor (NP), etc; It can also be a Digital Signal Processor (DSP), Application Specific Integrated Circuit (ASIC), Field Programmable Gate Array (FPGA), or other programmable logic devices, discrete gates or transistor logic devices, or discrete hardware components. The disclosed methods, steps, and logical diagrams in the embodiments of the present application can be implemented or executed. A general processor may be a microprocessor or any conventional processor, etc. The steps of the method disclosed in the embodiments of the present application may be directly implemented by a hardware decoding processor, or implemented by a combination of hardware and software modules in the decoding processor. The software module can be located in a storage medium well-known in the art, such as random access memory, flash memory, read-only memory, programmable read-only memory, electrically erasable programmable memory, registers, etc. The storage medium is located in the memory, and the processor reads the information in the memory and, in conjunction with its hardware, completes the steps of the above method.

The electronic device can also execute the various methods described in the previous method embodiments, and achieve the functions and beneficial effects of the various methods described in the previous method embodiments, which will not be repeated here.

In some embodiments, besides software implementation, the electronic device of the present application does not exclude other implementation methods, such as logic devices or a combination of software and hardware. That is to say, the executing subject of the following processing flow is not limited to each logic unit, but can also be hardware or logic devices.

The present embodiment also proposes a computer-readable storage medium that stores one or more programs. When executed by an electronic device comprising multiple application programs, the one or more programs enable the electronic device to perform the methods disclosed in the embodiments shown in Figs. 1-3 and achieve the functions and beneficial effects of the methods described in the previous embodiments, which will not be repeated here.

Among them, the computer-readable storage medium includes Read Only Memory (ROM), Random Access Memory (RAM), magnetic disk or optical disk, etc.

Furthermore, the embodiments of the present application also provide a computer program product, which comprises a computer program stored on a non-temporary computer-readable storage medium, the computer program comprising program instructions. When the program instructions are executed by a computer, the following process is implemented: the methods disclosed in the embodiments shown in Figs. 1-3 and the functions and beneficial effects of the methods described in the previous embodiments are implemented, which will not be repeated here.

In summary, the above description is only preferred embodiments of the present application and is not intended to limit the protection scope of the present application. Any modifications, equivalent substitutions, improvements, etc. made within the spirit and principles of the present application shall be included within the protection scope of the present application.

The system, device, module, or unit described in the above embodiments can be implemented by computer chips or entities, or by products with certain functions. A typical implementation device is a computer. Specifically, computers can include personal computers, laptops, cellular phones, camera phones, smartphones, personal digital assistants, media players, navigation devices, email devices, game consoles, tablets, wearable devices, or any combination of these devices.

Computer readable media, including permanent and non-permanent, removable and non-removable media, can be used by any method or technology to achieve information storage. Information can be computer-readable instructions, data structures, modules of programs, or other data. Examples of storage medium for computers include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, read-only optical disc read-only memory (CD-ROM), digital versatile disc (DVD) or other optical storage, magnetic tape cartridges, magnetic disk storage or other magnetic storage devices, or any other non-transmission medium that can be used to store information that can be accessed by computing devices. According to the definition in this article, computer-readable media does not include transitory computer-readable media such as modulated data signals and carriers.

It should be noted that, the terms "include", "comprises" or any other variants thereof herein are intended to cover non-exclusive inclusion, so that a process, method, article or apparatus including a series of elements includes not only those elements, but also other elements not explicitly listed, or also includes elements inherent to such process, method, article or apparatus. In the absence of further restrictions, an element defined by the sentence "comprising a ..." does not exclude the presence of other identical elements in the process, method, article or apparatus comprising the element.

The various embodiments in this manual are described in a progressive manner, and the same and similar parts between each embodiment can be referred to each other. Each embodiment focuses on the differences from other embodiments. Especially for the system implementation example, due to its basic similarity to the method embodiment, the description is relatively simple. For relevant information, please refer to the partial explanation of the method embodiment.

## Claims

1. A parallelism determination method in a distributed operation, comprising:
acquiring data features in operation data corresponding to a distributed operation;
acquiring candidate parallelisms in a candidate parallelism list, to determine execution time in a candidate reduction stage according to the candidate parallelisms and the data features; and
determining, from the candidate parallelism list, a target parallelism corresponding to the distributed operation according to the execution time in the candidate reduction stage.

2. The method according to claim 1, wherein acquiring candidate parallelisms in a candidate parallelism list, to determine execution time in a candidate reduction stage according to the candidate parallelisms and the data features, and determining, from the candidate parallelism list, a target parallelism corresponding to the distributed operation according to the execution time in the candidate reduction stage, comprising:
traversing the candidate parallelisms in the candidate parallelism list, wherein the candidate parallelism list is determined according to a candidate parallelism range and a first interval;
stopping a search when the search duration does not reach a first threshold, but a candidate parallelism that meets a first condition is found, and taking the candidate parallelism that meets the first condition as the target parallelism corresponding to the distributed operation;
wherein the first condition comprises that the execution time in the candidate reduction stage determined according to the candidate parallelisms and the data features meets a first requirement.

3. The method according to claim 2, wherein acquiring candidate parallelisms in a candidate parallelism list, to determine execution time in a candidate reduction stage according to the candidate parallelisms and the data features, and determining, from the candidate parallelism list, a target parallelism corresponding to the distributed operation according to the execution time in the candidate reduction stage, further comprising:
redetermining the candidate parallelism list according to the candidate parallelism range and a second interval, when the search duration does not reach the first threshold, but the candidate parallelism list has been traversed and no candidate parallelism that meets the first condition is found, wherein the second interval is smaller than the first interval;
re-traversing the candidate parallelisms in the redetermined candidate parallelism list;
stopping the search when the search duration does not reach the first threshold and a candidate parallelism that meets the first condition is found, and taking the candidate parallelism that meets the first condition as the target parallelism of the distributed operation.

4. The method according to claim 2, wherein acquiring candidate parallelisms in a candidate parallelism list, to determine execution time in a candidate reduction stage according to the candidate parallelisms and the data features, and determining, from the candidate parallelism list, a target parallelism corresponding to the distributed operation according to the execution time in the candidate reduction stage, further comprising:
taking the candidate parallelism that meets a second condition during the search as the target parallelism of the distributed operation, when the search duration does not reach the first threshold, but no candidate parallelism that meets the first condition is found;
wherein the second condition comprises that the execution time in the candidate reduction stage determined according to the candidate parallelisms and the data features meets a second requirement.

5. The method according to claim 2, wherein the execution time in the candidate reduction stage determined according to the candidate parallelisms and the data features meeting the first requirement, comprising:
determining an improvement effect according to the execution time in the candidate reduction stage and the execution time in a benchmark reduction stage;
determining that the first requirement is met when the improvement effect is greater than a second threshold;
wherein the execution time in the benchmark reduction stage is determined according to the data features and a benchmark parallelism.

6. The method according to claim 5, wherein determining the execution time in the candidate reduction stage according to the candidate parallelisms and the data features, comprising:
inputting feature vectors corresponding to the candidate parallelisms and the data features into a target prediction model to obtain the execution time in the candidate reduction stage;
wherein the target prediction model is trained based on a first training dataset, the first training dataset comprises feature data and label data from historical operation data corresponding to the distributed operation, the label data is the execution time in a reduction stage corresponding to the distributed operation.

7. The method according to claim 6, wherein the target prediction model is a random forest model, and the method further comprising:
determining a second training dataset, when a newly added distributed operation relative to the distributed operation is acquired, according to the operation data corresponding to the newly added distributed operation;
performing incremental training on a newly added decision tree in the random forest using the second training dataset; wherein the newly added decision tree corresponds to the newly added distributed operation, the second training dataset comprises feature data and label data in the operation data corresponding to the newly added distributed operation, and the label data is the execution time in the reduction stage corresponding to the newly added distributed operation.

8. The method according to any one of claims 1-7, wherein the method further comprising:
converting the data features into the feature vectors according to a first rule;
wherein the first rule comprises at least one of the following:
converting the data feature into the feature vector according to the one hot encoding rule when the data feature is an enumeration type value;
converting the data feature into the feature vector according to a second rule, when the data feature is a numerical type value, wherein the second rule comprises splitting the data feature by numerical bits according to numerical bits, and retaining the first two non-zero digits in the split numerical bits based on rounding logic, ignoring non-zero digits in other numerical bits after the first two non-zero digits;
selecting, when the data feature is a numerical value including a unit, any unit in the data feature as a benchmark unit, and converting the data feature into the feature vector based on the benchmark unit and the second rule.

9. The method according to any one of claims 1-7, wherein the data feature comprises at least one of the following: reduction operator type, input data scale, mapping parallelism, and reduction parallelism.

10. An electronic device, comprising:
a processor; and
a memory arranged to store computer-executable instructions, which, when executed by the processor, implement the steps of the method according to any one of claims 1-9.

11. A computer-readable storage medium, having one or more programs stored thereon, wherein the one or more programs, when executed by an electronic device having a plurality of application programs, implement the steps of the method according to any one of claims 1-9.
